# FASCICULE DE BREVET EUROPEEN

(11) **EP 4 382 430 B1**
(45) Date de publication et mention de la délivrance du brevet: **11.03.2026**
(21) Numéro de dépôt: 23214156.4
(22) Date de dépôt: 05.12.2023
(51) Int. Cl.: B64D 13/06, B64D 41/00

(54) **SYSTÈME AUTONOME DE CONDITIONNEMENT D'AIR POUR AÉRONEF**
AUTONOMES KLIMATISIERUNGSSYSTEM FÜR EIN FLUGZEUG
AUTONOMOUS AIR CONDITIONING SYSTEM FOR AN AIRCRAFT

(30) Priorité: 06.12.2022 FR 2212852
(43) Date de publication de la demande: 12.06.2024
(73) Titulaire: Airbus SAS, 31700 Blagnac (FR); Airbus Operations SAS, 31060 Toulouse (FR); Airbus Operations GmbH, 21129 Hamburg (DE)
(72) Inventeur: JOSSET, Thomas, 31060 TOULOUSE (FR); POIRIER, Didier, 31700 BLAGNAC Cedex (FR); BAMMANN, Holger, 21129 HAMBURG (FR)
(74) Mandataire: Cabinet Le Guen Maillet

(56) Documents cités:
- EP-A2- 1 094 212
- WO-A1-2022/148511
- US-A1- 2007 266 695
- US-A1- 2009 211 273
- US-A1- 2009 305 092
- US-A1- 2017 170 494

## Description

### DOMAINE TECHNIQUE

La présente invention concerne le domaine du conditionnement d'air en température et pression pour une cabine d'aéronef et concerne plus particulièrement un système de conditionnement d'air alimenté de manière autonome.

### ETAT DE LA TECHNIQUE ANTERIEURE

La production d'air conditionné est nécessaire dans un aéronef afin d'obtenir, dans une cabine, des conditions de pression et de température adaptées à l'humain. Une telle production d'air conditionné est effectuée par un dispositif de compression.

Le dispositif de compression peut être alimenté énergétiquement par de l'air de prélèvement moteur (« bleed air » en anglais), issu de moteurs de propulsion ou de groupes auxiliaires de puissance.

Toutefois, dans certains aéronefs, l'air de prélèvement moteur est inexistant ou ne peut pas être utilisé comme source d'énergie. Il est alors nécessaire d'alimenter électriquement le dispositif de compression, ce qui peut être effectué par un réseau électrique de l'aéronef. Or, les réseaux électriques existants équipant les aéronefs utilisent un courant alternatif de tension relativement faible, de 115V, tandis que le compresseur nécessite une alimentation en courant continu et avec une tension plus élevée, de 540V. L'alimentation électrique du dispositif de compression par le réseau électrique de l'aéronef nécessite alors de nombreuses modifications d'un tel réseau électrique existant, en termes d'architecture de distribution mais également au niveau d'un dispositif de centralisation de la gestion électrique appelé cœur électrique. De telles modifications sont particulièrement contraignantes.

Il est alors souhaitable de pallier ces inconvénients de l'état de la technique.

Il est notamment souhaitable de fournir une solution qui permette d'alimenter électriquement le compresseur produisant de l'air conditionné sans modifier le réseau électrique existant de l'aéronef et de manière simple. Il est en outre souhaitable de fournir une solution facile à intégrer dans l'aéronef.

Les documents US 2017/170494 A1, US 2009/211273 A1, US 2007/266695 A1 et US 2009/305092 A1 divulguent des systèmes autonomes de conditionnement d'air selon l'art antérieur.

### EXPOSE DE L'INVENTION

Un objet de la présente invention est de proposer un système autonome de conditionnement d'air pour un aéronef, selon la revendication 1.

Ainsi, il est possible d'effectuer le conditionnement de l'air de la cabine de manière autonome, avec une alimentation électrique fournie par le système autonome de conditionnement d'air lui-même, ce qui évite de modifier un réseau électrique préexistant de l'aéronef.

Selon un mode de réalisation particulier, le système comporte en outre un premier échangeur thermique effectuant un échange thermique entre l'air comprimé fourni par le compresseur primaire et de l'air prélevé à l'extérieur de l'aéronef, le premier échangeur thermique étant situé en aval du compresseur primaire et en amont de l'ensemble de piles à combustible et de la cabine de l'aéronef.

Selon un mode de réalisation particulier, le compresseur primaire est en outre alimenté en énergie mécanique par une première turbine, la première turbine recevant en entrée une troisième partie de l'air comprimé fourni par le compresseur primaire et étant située en aval du premier échangeur thermique.

Selon un mode de réalisation particulier, le système comporte en outre un compresseur secondaire, le compresseur secondaire étant situé entre le compresseur primaire et l'ensemble de piles à combustible et comprimant la seconde partie de l'air comprimé fourni par le compresseur primaire.

Selon un mode de réalisation particulier, le compresseur secondaire est alimenté en énergie mécanique par une seconde turbine, la seconde turbine recevant en entrée de l'air comprimé issu de l'ensemble de piles à combustible.

Selon un mode de réalisation particulier, le système comporte en outre un second moteur électrique alimenté électriquement par l'énergie électrique fournie par l'ensemble de piles à combustible, le second moteur électrique fournissant de l'énergie mécanique au compresseur secondaire.

Selon un mode de réalisation particulier, le système comporte en outre un contrôleur configuré pour implémenter un algorithme de régulation de paramètres de température, pression et débit d'air comprimé et configuré pour envoyer des instructions de contrôle à des éléments actifs du système assurant des fonctions de contrôle de débit, de pression et de température de l'air comprimé.

Selon un mode de réalisation particulier, le système comporte en outre un commutateur configuré pour connecter électriquement à l'ensemble de piles à combustible, et de manière alternative, un premier ensemble électrique et un second ensemble électrique, le premier ensemble électrique étant agencé pour alimenter électriquement le système, le second ensemble électrique étant agencé pour alimenter électriquement des équipements extérieurs au système et assurant des fonctions de sécurité dans l'aéronef.

L'invention concerne également un aéronef comportant un tel système autonome de conditionnement d'air.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un aéronef comportant un système autonome de conditionnement d'air ;
[Fig. 2] illustre schématiquement le système autonome de conditionnement d'air selon un premier mode de réalisation ;
[Fig. 3A] illustre schématiquement le système autonome de conditionnement d'air selon un deuxième mode de réalisation ;
[Fig. 3B] illustre schématiquement le système autonome de conditionnement d'air selon un troisième mode de réalisation ;
[Fig. 4] illustre schématiquement un contrôleur du système autonome de conditionnement d'air et des éléments du système autonome de conditionnement d'air, et
[Fig. 5] illustre schématiquement un exemple d'architecture matérielle du contrôleur.

### EXPOSE DETAILLE DE MODES DE REALISATION

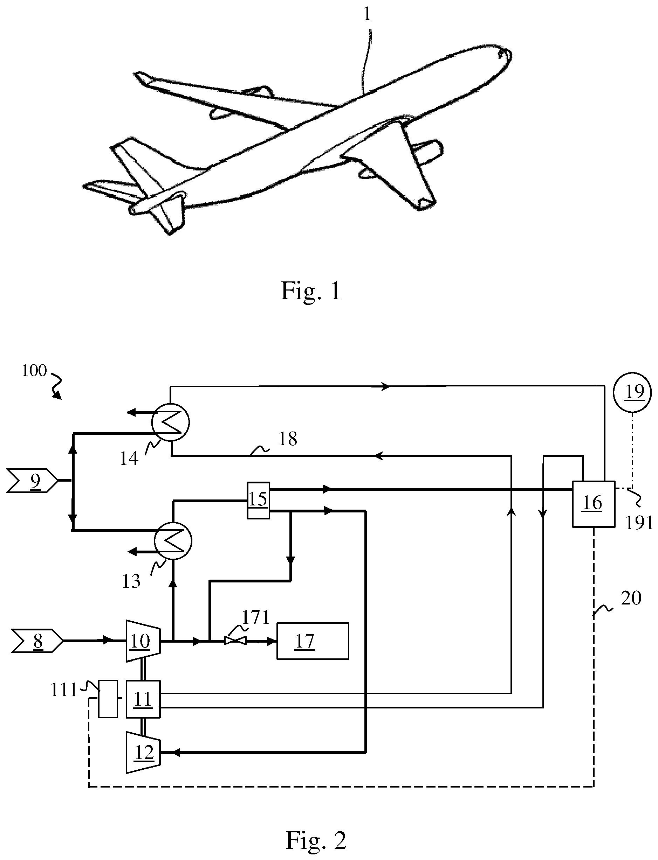

La **Fig. 1** illustre ainsi schématiquement un aéronef 1 comportant au moins un système autonome 100 de conditionnement d'air (représenté en Fig. 2). L'aéronef 1 comporte préférentiellement deux systèmes autonomes 100 de conditionnement d'air.

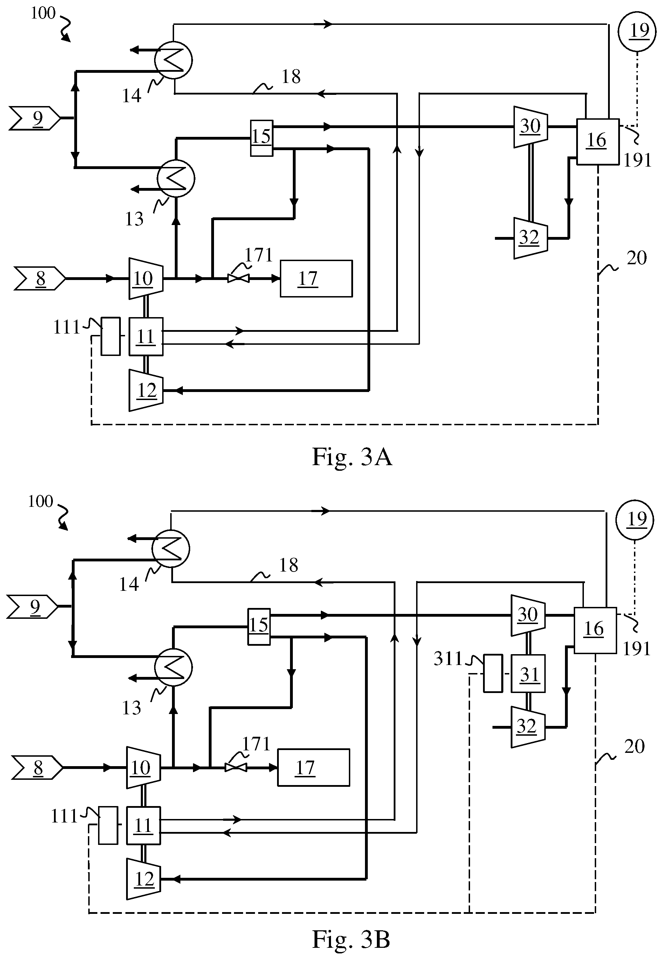

La **Fig. 2** illustre schématiquement le système autonome 100 de conditionnement d'air selon un premier mode de réalisation. Sur cette figure, ainsi que sur les Figs. 3A et 3B, les traits continus épais représentent des canalisations d'air, les traits continus fins représentent des canalisations dans lesquelles circule un fluide caloporteur, les traits discontinus représentent des liaisons électriques et les traits doublés représentent des transmissions d'énergie mécanique. Des canalisations de dihydrogène 191 sont représentées par des traits mixtes.

Le système autonome 100 de conditionnement d'air comporte un compresseur primaire 10 recevant en entrée de l'air ambiant et fournissant de l'air comprimé. Le système autonome 100 de conditionnement d'air comporte en outre un premier moteur 11 qui transmet de l'énergie mécanique au compresseur primaire10. Dit autrement, le premier moteur 11 permet la mise en mouvement d'éléments du compresseur 10 afin d'obtenir, à partir d'air ambiant, de l'air comprimé. Le premier moteur 11 est contrôlé par une première unité de contrôle moteur 111 (« Motor Control Unit » ou MCU en anglais) qui détermine la puissance et la vitesse de rotation du premier moteur 11. Le système autonome 100 de conditionnement d'air comporte un premier dispositif de prélèvement d'air 8 destiné à récupérer l'air ambiant à l'extérieur de l'aéronef 1. Le premier dispositif de prélèvement d'air 8 comporte par exemple une ou plusieurs écopes permettant de récupérer l'air ambiant à l'extérieur de l'aéronef 1. Une canalisation d'air relie le premier dispositif de prélèvement d'air 8 au compresseur primaire 10 afin d'injecter l'air ambiant dans le compresseur primaire 10.

Une première partie de l'air comprimé fourni par le compresseur primaire 10 est injectée dans une cabine 17 de l'aéronef 1, soit directement en sortie du compresseur primaire 10, soit après un passage par un premier échangeur thermique 13 permettant de refroidir l'air comprimé. Une vanne 171 permet de réguler le débit d'air comprimé injecté dans la cabine 17. Des conditions de pression et de température adaptées aux activités humaines peuvent ainsi être obtenues dans la cabine 17 dans l'aéronef 1.

Le système autonome 100 de conditionnement d'air comporte en outre un ensemble de piles à combustible 16 (« Fuel Cells Stack » en anglais). L'ensemble de piles à combustible 16 est alimenté en air, qui comporte du dioxygène, d'une part, et en dihydrogène, d'autre part, et fournit de l'énergie électrique. L'alimentation en dihydrogène provient d'un réservoir 19 de dihydrogène situé dans l'aéronef 1. Le réservoir 19 de dihydrogène peut appartenir au système autonome 100 de conditionnement d'air et être dédié à l'ensemble de piles à combustible 16. Alternativement, le réservoir 19 de dihydrogène est extérieur au système autonome 100 de conditionnement d'air et est en outre utilisé pour d'autres fonctions nécessitant une alimentation en dihydrogène, telle que la propulsion de l'aéronef 1, ce qui permet de minimiser l'encombrement du système autonome 100 de conditionnement d'air.

L'alimentation en air de l'ensemble de piles à combustible 16 est effectuée par de l'air comprimé issu du compresseur primaire 10. Dit autrement, une deuxième partie de l'air comprimé fourni par le compresseur primaire 10 est injectée dans l'ensemble de piles à combustible 16. Ainsi, le compresseur primaire 10 alimente conjointement en air comprimé la cabine 17 et l'ensemble de piles à combustible 16.

Le premier dispositif de prélèvement d'air 8 est donc utilisé à la fois pour conditionner l'air de la cabine 17 et pour permettre le fonctionnement de l'ensemble de piles à combustible 16. L'utilisation d'un unique premier dispositif de prélèvement d'air 8 au lieu de deux, un qui serait dédié au conditionnement d'air de la cabine 17 et un qui serait dédié au fonctionnement des piles à combustible 16, permet de réduire la traînée de l'aéronef 1.

L'énergie électrique fournie par l'ensemble de piles à combustible 16 est récupérée dans un circuit électrique 20 afin d'être au moins partiellement transmise au premier moteur 11 et à la première unité de contrôle moteur 111. Le premier moteur 11 et la première unité de contrôle 111 sont ainsi alimentés électriquement par l'ensemble de piles à combustible 16 et ne nécessitent donc pas d'énergie électrique provenant d'un réseau électrique préexistant de l'aéronef 1. Ainsi, le conditionnement de l'air de la cabine 17 est effectué de manière autonome, ce qui évite de modifier le réseau électrique préexistant de l'aéronef 1.

Le système autonome 100 de conditionnement d'air comporte le premier échangeur thermique 13 configuré pour effectuer un échange de chaleur entre de l'air comprimé issu du compresseur primaire 10, plus chaud, et de l'air, plus froid, prélevé à l'extérieur de l'aéronef 1 par un second dispositif de prélèvement d'air 9. Le premier échangeur thermique 13 permet ainsi de refroidir au moins une portion d'air comprimé issu du compresseur primaire 10, la compression ayant entraîné une augmentation de la température de l'air. Le premier échangeur thermique 13 est donc situé en aval du compresseur primaire 10 et est en outre situé en amont de l'ensemble de piles à combustible 16.

En sortie du compresseur primaire 10, la portion d'air comprimé qui n'est pas injectée directement dans la cabine 17 circule à travers le premier échangeur thermique 13 avant d'être injectée dans la cabine 17. Dans ce cas, le premier échangeur thermique 13 est en outre situé en amont de la cabine 17.

Le système autonome 100 de conditionnement d'air comporte un diffuseur 15 qui permet de distribuer le flux d'air comprimé en sortie du premier échangeur thermique 13 vers l'ensemble de piles à combustible 16 d'une part et vers la cabine 17 et/ou une première turbine 12 du système autonome 100 de conditionnement d'air d'autre part.

La première turbine 12 reçoit en entrée de l'air comprimé issu du compresseur primaire 10 et qui n'est ni injecté dans l'ensemble de piles à combustible 16, ni injecté dans la cabine 17. La première turbine 12 effectue une détente de l'air comprimé reçu afin de récupérer de l'énergie par réduction de la pression de l'air. L'énergie mécanique ainsi fournie par la première turbine 12 est transmise au compresseur primaire 10, ce qui permet d'augmenter le rendement de compression de l'air comprimé. En sortie de la première turbine 12, l'air est relâché dans l'atmosphère.

Le système autonome 100 de conditionnement d'air comporte en outre un circuit de refroidissement 18 permettant de refroidir l'ensemble de piles à combustible 16 et le premier moteur 11. Le circuit de refroidissement 18 est un circuit fermé et comporte une canalisation dans laquelle circule un fluide caloporteur. Le fluide caloporteur circule successivement dans un dispositif de refroidissement (non représenté) de l'ensemble de piles à combustibles 16, dans un dispositif de refroidissement (non représenté) du premier moteur 11 et dans un second échangeur thermique 14. Les dispositifs de refroidissement respectifs de l'ensemble de piles à combustibles 16 et du premier moteur 11 comportent par exemple des voies de refroidissement traversées par le fluide caloporteur qui agissent comme des échangeurs thermiques et permettent d'effectuer un transfert de chaleur depuis l'ensemble de piles à combustibles 16, respectivement le premier moteur 11, vers le fluide caloporteur. Le fluide caloporteur, réchauffé par lesdits transferts de chaleur, circule alors dans le second échangeur thermique 14. Le second échangeur thermique 14 permet d'effectuer un transfert de chaleur depuis le fluide caloporteur vers de l'air, plus froid, prélevé à l'extérieur de l'aéronef 1 par le second dispositif de prélèvement d'air 9 afin de refroidir le fluide caloporteur. Le circuit de refroidissement 18 peut en outre comporter d'autres éléments, tels qu'une pompe permettant d'activer la circulation du fluide caloporteur et un réservoir de fluide caloporteur.

Ainsi, le refroidissement de l'ensemble de piles à combustible 16 et du premier moteur 11 est mutualisé grâce à un unique circuit de refroidissement 18, ce qui permet de réduire l'encombrement, le poids et le coût du système autonome 100 de conditionnement d'air.

En outre, le second dispositif de prélèvement d'air 9 est utilisé à la fois pour le conditionnement d'air de la cabine 17 et pour le fonctionnement de l'ensemble de piles à combustible 16. L'utilisation d'un unique second dispositif de prélèvement d'air 9 au lieu de deux permet ainsi de réduire la traînée de l'aéronef 1.

Selon un exemple de réalisation, le premier dispositif de prélèvement d'air 8 est une entrée d'air dynamique (« ram air inlet » en anglais) et le second dispositif de prélèvement d'air 9 est une entrée d'air de type écope.

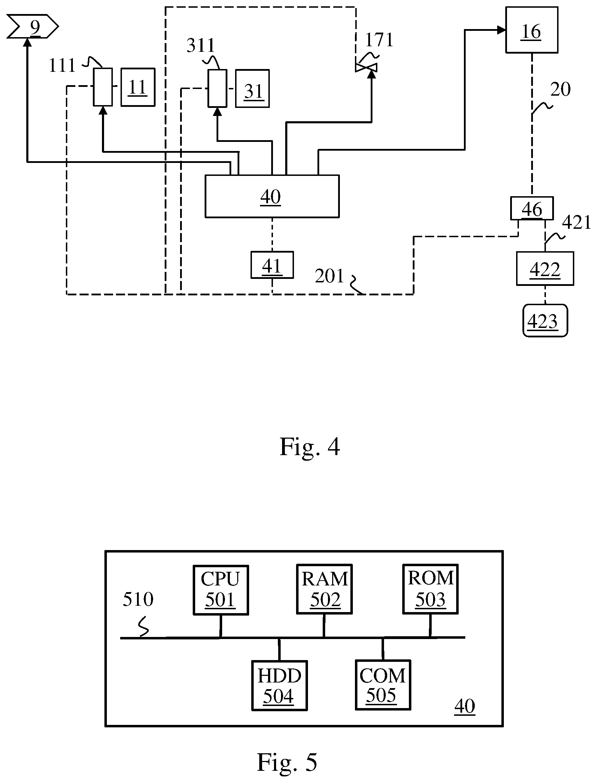

Le système autonome 100 de conditionnement d'air comporte en outre un contrôleur 40 (représenté en Fig. 4) qui permet de contrôler des éléments du système autonome 100 et d'effectuer une régulation de paramètres de l'air comprimé, tels que la pression, la température, le débit d'air injecté dans la cabine 17 et le débit d'air injecté dans l'ensemble de piles à combustible 16, afin d'obtenir de l'air comprimé adapté au conditionnement d'air de la cabine 17 et au fonctionnement de l'ensemble de piles à combustible 16.

Le système autonome 100 de conditionnement d'air peut en outre comporter un déshumidificateur (non représenté) situé entre le diffuseur 15 et la première turbine 12, afin de réduire la quantité d'eau présente dans l'air comprimé.

La **Fig. 3A** illustre schématiquement le système autonome 100 de conditionnement d'air selon un deuxième mode de réalisation.

Selon le deuxième mode de réalisation, le système autonome 100 de conditionnement d'air comporte en outre un compresseur secondaire 30 situé entre le diffuseur 15 et l'ensemble de piles à combustible 16. Le compresseur secondaire 30 permet de comprimer la deuxième partie de l'air comprimé issu du compresseur primaire 10, afin d'en augmenter la pression et obtenir ainsi des conditions de pression adaptées au fonctionnement de l'ensemble de piles à combustible 16. Par exemple, le compresseur secondaire 30 permet d'augmenter la pression de l'air comprimé en passant d'une pression d'environ 0,8 bar à une pression comprise entre 1,2 et 2 bars.

Le compresseur secondaire 30 est ainsi installé en série avec le compresseur primaire 10, sur une canalisation d'injection d'air dans l'ensemble de piles à combustible 16. La quantité d'air requise pour l'alimentation de l'ensemble de piles à combustible 16 étant faible par rapport à la quantité d'air requise pour le conditionnement de la cabine 17, le compresseur secondaire 30 est plus petit que le compresseur primaire 10. En outre, le volume du compresseur primaire 10 est équivalent à celui d'un compresseur qui serait utilisé uniquement pour le conditionnement de la cabine 17. Ainsi, l'installation en série du compresseur secondaire 30 permet de réduire le poids et l'encombrement du système autonome 100 de conditionnement d'air par rapport à une installation dans laquelle un compresseur spécifique à la compression d'air destiné à l'ensemble de piles à combustible 16 serait utilisé, prenant en entrée de l'air provenant de l'extérieur de l'aéronef. Le rendement d'approvisionnement en air comprimé est ainsi amélioré.

Selon le deuxième mode de réalisation, le système autonome 100 de conditionnement d'air comporte en outre une deuxième turbine 32. La deuxième turbine 32 reçoit en entrée de l'air issu de l'ensemble de piles à combustible 16 et effectue une détente dudit air afin de récupérer de l'énergie. L'énergie fournie par la deuxième turbine 32 est transmise au compresseur secondaire 30 et permet d'alimenter énergétiquement le compresseur secondaire 30.

La Fig. 3B illustre schématiquement le système autonome 100 de conditionnement d'air selon un troisième mode de réalisation.

Selon le troisième mode de réalisation, le système autonome 100 de conditionnement d'air comporte le compresseur secondaire 30 et la deuxième turbine 32 décrits précédemment en relation avec la Fig. 3A, et comporte en outre un deuxième moteur 31 et une deuxième unité de contrôle moteur 311 permettant de contrôler le deuxième moteur 31. Le deuxième moteur 31 transmet au compresseur secondaire 30 de l'énergie mécanique qui s'ajoute à l'énergie transmise par la deuxième turbine 32. Cela permet d'obtenir une alimentation énergétique du compresseur secondaire 30 suffisante pour obtenir une pression d'air adaptée au fonctionnement de l'ensemble de piles à combustibles 16 lorsque la récupération d'énergie permise par la deuxième turbine 32 ne suffit pas.

Le deuxième moteur 31 et la deuxième unité de contrôle moteur 311 sont alimentés électriquement par le circuit électrique 20, autrement dit par de l'électricité fournie par l'ensemble de piles à combustible 16. Le deuxième moteur 31 et la deuxième unité de contrôle moteur 311 ne nécessitent donc pas d'énergie électrique provenant du réseau électrique préexistant de l'aéronef 1.

Le système autonome 100 de conditionnement d'air selon les deuxième et troisième modes de réalisation peut en outre comporter un troisième échangeur thermique (non représenté) permettant d'effectuer un transfert de chaleur depuis l'air sortant de l'ensemble de piles à combustible 16 vers l'air comprimé entrant dans l'ensemble de piles à combustible, permettant ainsi de réchauffer l'air entrant dans l'ensemble de piles à combustible. Le troisième échangeur thermique est donc situé, sur une canalisation d'air en entrée de l'ensemble de piles à combustible 16, en aval du compresseur secondaire 30, et situé, sur une canalisation d'air en sortie de l'ensemble de piles à combustible 16, en amont de la deuxième turbine 32.

La **Fig. 4** illustre schématiquement un contrôleur 40 du système autonome 100 de conditionnement d'air et d'autres éléments du système autonome 100 de conditionnement d'air.

Le contrôleur 40 assure le contrôle d'éléments du système autonome 100 de conditionnement d'air, dits éléments actifs, en transmettant des instructions de contrôle par le biais de liaisons de communications représentées sur la Fig. 4 par des flèches en traits continus. Les traits discontinus représentent sur la Fig. 4 des liaisons électriques.

Les éléments actifs contrôlés par le contrôleur 40 effectuent des fonctions nécessaires au fonctionnement du système autonome 100 de conditionnement d'air telles que la compression d'air, la gestion de débits de fluides, la gestion thermique de fluides ou de dispositifs et la gestion d'humidité de l'air. Les éléments actifs permettent ainsi de faire varier des paramètres tels que le débit, la pression et la température de l'air comprimé. Selon un mode de réalisation représenté en Fig. 4, le contrôleur 40 contrôle le second dispositif de prélèvement d'air 9, la première unité de contrôle moteur 111, la deuxième unité de contrôle moteur 311 lorsqu'elle existe, la vanne 171, l'ensemble de piles à combustible 16 comportant des vannes de contrôle de débit d'air et de dihydrogène.

Des instructions envoyées par le contrôleur 40 à la première unité de contrôle moteur 111 permettent par exemple d'ajuster la puissance ou la vitesse du moteur, afin de faire varier la pression et la température d'air comprimé en sortie du premier compresseur 10.

Des instructions envoyées par le contrôleur 40 au second dispositif de prélèvement d'air 9 permettent par exemple de modifier le débit d'air entrant, afin de faire varier la température du fluide caloporteur et de faire varier la température de l'air comprimé en sortie du premier échangeur thermique 13.

Des instructions envoyées par le contrôleur 40 à la vanne 171 permet d'ajuster le débit d'air comprimé en entrée de la cabine 17.

Des instructions envoyées par le contrôleur 40 à la deuxième unité de contrôle moteur 311 permettent par exemple d'ajuster la puissance ou la vitesse du deuxième moteur 31, afin de faire varier la pression et la température d'air comprimé en entrée de l'ensemble de piles à combustible 16.

Des instructions envoyées par le contrôleur 40 à l'ensemble de piles à combustible 16 permettent par exemple de modifier le débit d'air entrant dans l'ensemble de piles à combustible 16 et/ou le débit de dihydrogène entrant dans l'ensemble de piles à combustible 16, par exemple par l'intermédiaire de vannes (non représentées).

Le contrôleur 40 est en outre capable d'implémenter un algorithme de régulation d'un ou plusieurs paramètres prédéfinis tels que la pression et la température d'air comprimé injecté dans la cabine 17, la pression et la température d'air comprimé injecté dans l'ensemble de piles à combustible 16, le débit d'air comprimé injecté dans la cabine 17, le débit d'air comprimé injecté dans l'ensemble de piles à combustible 16 ou la puissance électrique fournie par l'ensemble de piles à combustible 16. Pour cela, le contrôleur 40 reçoit des informations en provenance de capteurs, tels que de capteurs de pression, température ou débit situés par exemple sur des canalisations d'air en entrée de la cabine 17 et en entrée de l'ensemble de piles à combustible 16 ou des capteurs de puissance électrique. L'implémentation d'un l'algorithme de régulation par le contrôleur 40 implique de traiter des données issues desdits capteurs et d'envoyer des instructions de contrôle aux éléments actifs du système autonome 100 de conditionnement d'air.

Le contrôleur 40 est alimenté électriquement par l'ensemble de piles à combustible 16. Le circuit électrique 20 comporte un convertisseur en tension 41 permettant de fournir au contrôleur 40 un courant continu à faible tension, par exemple de 28V.

Selon un mode de réalisation, le circuit électrique 20 comporte en outre un commutateur 46. Le commutateur 46 peut connecter électriquement le circuit électrique 20 relié à l'ensemble de piles à combustible 16, soit à un premier ensemble électrique 201 alimentant le système autonome 100 de conditionnement d'air, soit à un second ensemble électrique 420 alimentant des charges électriques prioritaires 423. Le premier ensemble électrique 201 comporte des liaisons électriques assurant l'alimentation des première et deuxième unités de contrôle moteur 111, 311, des premier et deuxième moteurs 11, 31, du contrôleur 40 et peut en outre comporter des liaisons électriques assurant l'alimentation de vannes, par exemple la vanne 171.

Le second ensemble électrique 420 assure l'alimentation des charges électriques prioritaires 423. Un convertisseur 422 est utilisé pour obtenir un courant alternatif à une tension adaptée auxdites charges électriques prioritaires 423. Les charges électriques prioritaires 423 sont des équipements extérieurs au système autonome 100 de conditionnement d'air et gérant des fonctions de sécurité, permettant ainsi d'assurer la sécurité de l'aéronef 1 et des passagers. Les charges électriques prioritaires 423 sont par exemple des équipements utilisés pour piloter l'aéronef 1 ou pour contrôler l'altitude de l'aéronef 1.

Le commutateur 46 est contrôlé par une unité de contrôle (non représentée). Lors d'une détection d'une situation d'urgence, par exemple lors d'une réception d'alarme, ladite unité de contrôle transmet une instruction de commutation au commutateur 46 afin d'arrêter l'alimentation du système autonome 100 de conditionnement d'air et d'alimenter les charges électriques prioritaires 423. Inversement, lorsque l'unité de contrôle détecte la fin d'une situation d'urgence, l'unité de contrôle transmet une instruction de commutation au commutateur 46 afin d'arrêter l'alimentation des charges électriques prioritaires 423 et d'alimenter à nouveau le système autonome 100 de conditionnement d'air.

Ainsi, l'ensemble de piles à combustible 16 du système autonome 100 de conditionnement d'air peut être utilisé comme source électrique d'urgence. En outre, ladite source électrique d'urgence peut être disponible dans un temps très court correspondant à la durée de commutation, par exemple inférieur à une seconde, puisque l'ensemble de piles à combustible 16 est déjà en fonctionnement lorsqu'une situation d'urgence est détectée par l'unité de contrôle du commutateur 46.

Selon un mode de réalisation, l'aéronef 1 comporte deux systèmes autonomes 100 de conditionnement d'air comportant chacun un commutateur 46 et comporte une unité de contrôle commune aux deux commutateurs 46. L'unité de contrôle commune, lorsqu'une situation d'urgence est détectée, conserve l'alimentation des fonctions de conditionnement d'air d'un des deux systèmes autonomes 100 de conditionnement d'air, et envoie une instruction de commutation au commutateur 46 de l'autre des deux systèmes autonomes 100 de conditionnement d'air pour alimenter les charges électriques prioritaires 423. Ainsi, il est possible d'assurer les fonctions de sécurité des charges électriques prioritaires 423 tout en permettant la fourniture d'air conditionné à la cabine 17.

La **Fig. 5** illustre schématiquement un exemple d'architecture matérielle du contrôleur 40. Le contrôleur 40 comporte alors, reliés par un bus de communication 510 : un processeur ou CPU (« Central Processing Unit » en anglais) 501 ; une mémoire vive RAM (« Random Access Memory » en anglais) 502 ; une mémoire morte ROM (« Read Only Memory » en anglais) 503 ; une unité de stockage ou un lecteur de support de stockage, tel qu'un disque dur HDD (« Hard Disk Drive » en anglais) 504 ; et une interface 505 permettant de communiquer avec les éléments actifs du système autonome 100 de conditionnement d'air et avec des capteurs installés dans le système autonome 100 de conditionnement d'air.

Le processeur 501 est capable d'exécuter des instructions chargées dans la RAM 502 à partir de la ROM 503, d'une mémoire externe (non représentée), d'un support de stockage, ou d'un réseau de communication. Lorsque contrôleur 40 est mis sous tension, le processeur 501 est capable de lire de la RAM 502 des instructions et de les exécuter. Ces instructions forment un programme d'ordinateur causant l'implémentation, par le processeur 501, de tout ou partie des algorithmes et étapes décrits ici en relation avec le contrôleur 40.

Ainsi, tout ou partie des algorithmes et étapes décrits ici en relation avec le contrôleur 40 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais). Ainsi, d'une manière générale, le contrôleur 40 comporte de la circuiterie électronique adaptée et configurée pour implémenter les algorithmes et étapes décrits ici en relation avec le contrôleur 40.

## Revendications

1. Système autonome (100) de conditionnement d'air pour un aéronef (1), comportant :
- un compresseur primaire (10) comprimant de l'air prélevé à l'extérieur de l'aéronef (1) et fournissant de l'air comprimé, une première partie dudit air comprimé étant injectée dans une cabine (17) de l'aéronef de sorte à conditionner en pression et en température l'air de la cabine (17),
- un premier moteur électrique (11) fournissant de l'énergie mécanique au compresseur primaire (10),
le système (100) comportant en outre un ensemble de piles à combustible (16) alimenté en air par une seconde partie de l'air comprimé fourni par le compresseur primaire (10), l'ensemble de piles à combustible (16) fournissant de l'énergie électrique alimentant le premier moteur électrique (10),
le système (100) étant **caractérisé en ce qu'**il comporte en outre un circuit de refroidissement (18), fermé, dans lequel circule un fluide caloporteur, le circuit de refroidissement (18) étant agencé pour refroidir l'ensemble de piles à combustible (16) et le premier moteur électrique (11) et étant en outre agencé pour permettre un échange thermique entre de l'air prélevé à l'extérieur de l'aéronef (1) et le fluide caloporteur de sorte à refroidir le fluide caloporteur.

2. Système (100) selon la revendication 1, comportant en outre un premier échangeur thermique (13) effectuant un échange thermique entre l'air comprimé fourni par le compresseur primaire (10) et de l'air prélevé à l'extérieur de l'aéronef (1), le premier échangeur thermique (13) étant situé en aval du compresseur primaire (10) et en amont de l'ensemble de piles à combustible (16) et de la cabine de l'aéronef (17).

3. Système (100) selon la revendication 2, dans lequel le compresseur primaire (10) est en outre alimenté en énergie mécanique par une première turbine (12), la première turbine (12) recevant en entrée une troisième partie de l'air comprimé fourni par le compresseur primaire (10) et étant située en aval du premier échangeur thermique (13).

4. Système (100) selon l'une quelconque des revendications 1 à 3, comportant en outre un compresseur secondaire (30), le compresseur secondaire (30) étant situé entre le compresseur primaire (10) et l'ensemble de piles à combustible (16) et comprimant la seconde partie de l'air comprimé fourni par le compresseur primaire (10).

5. Système (100) selon la revendication précédente, dans lequel le compresseur secondaire (30) est alimenté en énergie mécanique par une seconde turbine (32), la seconde turbine (32) recevant en entrée de l'air comprimé issu de l'ensemble de piles à combustible (16).

6. Système (100) selon la revendication précédente, comportant en outre un second moteur électrique (31) alimenté électriquement par l'énergie électrique fournie par l'ensemble de piles à combustible (16), le second moteur électrique (31) fournissant de l'énergie mécanique au compresseur secondaire (30).

7. Système (100) selon l'une quelconque des revendications 1 à 6, comportant en outre un contrôleur (40) configuré pour implémenter un algorithme de régulation de paramètres de température, pression et débit d'air comprimé et configuré pour envoyer des instructions de contrôle à des éléments actifs (9, 111, 311, 171, 16) du système assurant des fonctions de contrôle de débit, de pression et de température de l'air comprimé.

8. Système (100) selon l'une quelconque des revendications 1 à 7 comportant en outre un commutateur (46) configuré pour connecter électriquement à l'ensemble de piles à combustible (16), et de manière alternative, un premier ensemble électrique (201) et un second ensemble électrique (401), le premier ensemble électrique (201) étant agencé pour alimenter électriquement le système (100), le second ensemble électrique(401) étant agencé pour alimenter électriquement des équipements extérieurs (423) au système et assurant des fonctions de sécurité dans l'aéronef.

9. Aéronef (1) comportant au moins un système autonome (100) de conditionnement d'air selon l'une quelconque des revendications 1 à 8.

## Patentansprüche

1. Autonomes Klimatisierungssystem (100) für ein Flugzeug (1), das Folgendes aufweist:
- einen Primärkompressor (10), der außerhalb des Flugzeugs (1) angesaugte Luft komprimiert und Druckluft liefert, wobei ein erster Teil der Druckluft in eine Kabine (17) des Flugzeugs eingeblasen wird, um die Luft in der Kabine (17) auf einen bestimmten Druck und eine bestimmte Temperatur zu bringen,
- einen ersten Elektromotor (11), der den Primärkompressor (10) mit mechanischer Energie versorgt,
wobei das System (100) ferner eine Brennstoffzellenanordnung (16) aufweist, die durch einen zweiten Teil der vom Primärkompressor (10) gelieferten Druckluft mit Luft versorgt wird, wobei die Brennstoffzellenanordnung (16) elektrische Energie liefert, die den ersten Elektromotor (10) versorgt,
wobei das System (100) **dadurch gekennzeichnet ist, dass** es darüber hinaus einen geschlossenen Kühlkreislauf (18) aufweist, in dem ein Wärmeträgerfluid zirkuliert, wobei der Kühlkreislauf (18) dazu ausgelegt ist, die Brennstoffzellenanordnung (16) und den ersten Elektromotor (11) zu kühlen, und außerdem dazu ausgelegt ist, einen Wärmeaustausch zwischen der außerhalb des Flugzeugs (1) entnommenen Luft und dem Wärmeträgerfluid zu ermöglichen, um das Wärmeträgerfluid zu kühlen.

2. System (100) nach Anspruch 1, das darüber hinaus einen ersten Wärmetauscher (13) aufweist, der einen Wärmeaustausch zwischen der vom Primärkompressor (10) gelieferten Druckluft und der außerhalb des Flugzeugs (1) entnommenen Luft durchführt, wobei der erste Wärmetauscher (13) nach dem Primärkompressor (10) und vor der Brennstoffzellenanordnung (16) und der Flugzeugkabine (17) angeordnet ist.

3. System (100) nach Anspruch 2, wobei der Primärkompressor (10) zusätzlich von einer ersten Turbine (12) mit mechanischer Energie versorgt wird, wobei die erste Turbine (12) einen dritten Teil der vom Primärkompressor (10) gelieferten Druckluft am Eingang erhält und nach dem ersten Wärmetauscher (13) angeordnet ist.

4. System (100) nach einem der Ansprüche 1 bis 3, das darüber hinaus einen Sekundärkompressor (30) aufweist, wobei sich der Sekundärkompressor (30) zwischen dem Primärkompressor (10) und der Brennstoffzellenanordnung (16) befindet und den zweiten Teil der vom Primärkompressor (10) gelieferten Druckluft komprimiert.

5. System (100) nach dem vorhergehenden Anspruch, wobei der Sekundärkompressor (30) durch eine zweite Turbine (32) mit mechanischer Energie versorgt wird, wobei die zweite Turbine (32) am Eingang Druckluft aus der Brennstoffzellenanordnung (16) erhält.

6. System (100) nach dem vorhergehenden Anspruch, das darüber hinaus einen zweiten Elektromotor (31) aufweist, der elektrisch mit der von der Brennstoffzellenanordnung (16) gelieferten elektrischen Energie versorgt wird, wobei der zweite Elektromotor (31) den Sekundärkompressor (30) mit mechanischer Energie versorgt.

7. System (100) nach einem der Ansprüche 1 bis 6, das darüber hinaus eine Steuerung (40) aufweist, die so konfiguriert ist, dass sie einen Algorithmus zur Regelung der Parameter Temperatur, Druck und Durchflussmenge der Druckluft implementiert und so konfiguriert ist, dass sie Steueranweisungen an aktive Elemente (9, 111, 311, 171, 16) des Systems sendet, die Funktionen zur Steuerung des Durchflusses, des Drucks und der Temperatur der Druckluft ausführen.

8. System (100) nach einem der Ansprüche 1 bis 7, das darüber hinaus einen Schalter (46) aufweist, der so konfiguriert ist, dass er die Brennstoffzellenanordnung (16) elektrisch mit einer ersten elektrischen Anordnung (201) und alternativ mit einer zweiten elektrischen Anordnung (401) verbindet, wobei die erste elektrische Anordnung (201) dazu ausgelegt ist, das System (100) elektrisch zu versorgen, und die zweite elektrische Anordnung (401) dazu ausgelegt ist, externe Geräte (423) des Systems elektrisch zu versorgen und Sicherheitsfunktionen im Flugzeug zu gewährleisten.

9. Flugzeug (1), das mindestens ein autonomes Klimatisierungssystem (100) nach einem der Ansprüche 1 bis 8 aufweist.

## Claims

1. Autonomous air-conditioning system (100) for an aircraft (1), comprising:
- a primary compressor (10) compressing air bled from outside the aircraft (1) and supplying compressed air, a first part of said compressed air being injected into a cabin (17) of the aircraft so as to condition the air in the cabin (17) in terms of pressure and temperature,
- a first electric motor (11) supplying mechanical energy to the primary compressor (10),
the system (100) further comprising a fuel cell stack (16) supplied with air from a second part of the compressed air supplied by the primary compressor (10), the fuel cell stack (16) supplying electrical power to the first electric motor (10),
the system (100) being **characterized in that** it further comprises a closed cooling circuit (18) in which a heat transfer fluid circulates, the cooling circuit (18) being arranged to cool the fuel cell stack (16) and the first electric motor (11) and being furthermore arranged to allow exchange of heat between air bled from outside the aircraft (1) and the heat transfer fluid so as to cool the heat transfer fluid.

2. System (100) according to Claim 1, further comprising a first heat exchanger (13) effecting an exchange of heat between the compressed air supplied by the primary compressor (10) and air bled from outside the aircraft (1), the first heat exchanger (13) being located downstream of the primary compressor (10) and upstream of the fuel cell stack (16) and of the aircraft cabin (17).

3. System (100) according to Claim 2, wherein the primary compressor (10) is further supplied with mechanical energy by a first turbine (12), the first turbine (12) receiving at its inlet a third part of the compressed air supplied by the primary compressor (10) and being located downstream of the first heat exchanger (13).

4. System (100) according to any one of Claims 1 to 3, further comprising a secondary compressor (30), the secondary compressor (30) being located between the primary compressor (10) and the fuel cell stack (16) and compressing the second part of the compressed air supplied by the primary compressor (10).

5. System (100) according to the preceding claim, wherein the secondary compressor (30) is supplied with mechanical energy by a second turbine (32), the second turbine (32) receiving at its inlet compressed air coming from the fuel cell stack (16).

6. System (100) according to the preceding claim, further comprising a second electric motor (31) electrically powered by the electrical energy provided by the fuel cell stack (16), the second electric motor (31) providing mechanical energy to the secondary compressor (30).

7. System (100) according to any one of Claims 1 to 6, further comprising a controller (40) configured to implement a control algorithm for regulating compressed-air temperature, pressure and flow-rate parameters and configured to send control commands to active elements (9, 111, 311, 171, 16) of the system providing compressed-air temperature, pressure and flow-rate control functions.

8. System (100) according to any one of Claims 1 to 7 further comprising a switch (46) configured to connect to the fuel cell stack (16), electrically and alternately, a first electrical assembly (201) and a second electrical assembly (401), the first electrical assembly (201) being arranged to supply electrical power to the system (100), the second electrical assembly (401) being arranged to supply electrical power to equipment (423) external to the system and performing safety functions in the aircraft.

9. Aircraft (1) comprising at least one autonomous air-conditioning system (100) according to any one of Claims 1 to 8.
